# EUROPEAN PATENT SPECIFICATION

(11) **EP 4 458 160 B1**
(45) Date of publication and mention of the grant of the patent: **22.10.2025**
(21) Application number: 23171727.3
(22) Date of filing: 04.05.2023
(51) Int. Cl.: A23G 1/20, A23G 1/26, A23G 3/02

(54) **CONFECTIONERY MOULDING LINE APPARATUS**
SÜSSWARENFORMLINIENVORRICHTUNG
APPAREIL DE LIGNE DE MOULAGE DE CONFISERIE

(43) Date of publication of application: 06.11.2024
(73) Proprietor: Aasted ApS, 3520 Farum (DK)
(72) Inventor: Haslund, Henning, 4632 Bjæverskov (DK); Aarøe, Esben Raahede, 3250 Gilleleje (DK); Prætorius, Michael, 2880 Bagsværd (DK)
(74) Representative: Heiden, Finn

(56) References cited:
- EP-A1- 0 583 740
- EP-A1- 0 928 562
- DE-A1- 3 705 093
- DE-C- 477 724
- DE-C1- 3 920 907
- US-A- 5 079 022

## Description

The present invention concerns a confectionery food production apparatus comprising a straight line depositing confectionery mass in cavities in an underlying row of continuously moving confectionery moulds supported and guided at their opposite sides by the insides of elongated track profiles. Each of which profiles are also carrying a respective endless chain. The chains are stretched between a plurality of sprocket wheels, arranged along the line, and each are driven by at least one sprocket wheel and a motor. The chains are each carrying a plurality of inwardly extending pins, which are engaging with recesses in the neighboring sides of the moulds. The straight line comprises at least a mass depositor unit and a cooling section.

Food production line apparatuses of the introductory art are widely applied in the food industry for producing a wide range of confectionery food articles, such as various chocolate articles. They are well-known as the "chain-driven" moulding lines. These production line apparatuses are often large, technically complicated and extensive in length, as they may produce many thousands of the same articles per hour, typically from a few hundred kilograms per hour and up to several thousands of kilograms chocolate articles per hour.

The chain-driven lines are predetermined in their configuration as comes to the numbers and succession of treatment sections, such as depositor units, cooling sections and other process units. However, as the production runs with continuously moving moulds and consequently full-time production, without the possibility of altering the configuration in a short time, the major chain-driven lines are capable of achieving a very high and satisfactory degree of utilization or the particular article being produced.

Examples of known food production lines are given in patent documents DE477724, DE3705093, and EP0928562.

However, as the chain-driven straight lines may be very long, up to more than 50 meters, and in some cases even up until nearly 100 meters, the demand for extended space in the manufacturing facilities, are often difficult to fulfill.

The high capacity and degree of utilization comes with a price, as all the many moulds must be replaced by a cumbersome work-process, when another article having a different configuration and shape, is to be produced. Only articles having rather simple shape, such as for example various well-known tablets, may be produced in the same set of moulds with different masses or fillings, without the necessity of replacing all the moulds. However, different types of depositors for the different masses and production runs, are then available along the lines, which again make the lines longer and more space demanding than desired. More diversified production leads to an even longer line.

A major problem to solve is to reduce the factory space requirement for the chain-driven lines, especially the length extension, and yet maintain their high degree of utilization during production of articles.

The inventive solution is characterized in, that that the apparatus comprises a further secondary straight line comprising the same as above and arranged in parallel to the first line, and which first and secondary straight lines are interconnected via two cross-conveyors adapted to carry the confectionery moulds forth and back between the two lines, that at the points of engagement with the cross-conveyors, the first and secondary lines comprise lifting-lowering devices, which are adapted to lift up a passing mould from the particular straight line and onto a cross-conveyor, or to lower a mould from the cross-conveyor and into a free opening in-between the moulds in the particular straight line, or are adapted to both, and which lifting-lowering devices are further comprising four shaft parts arranged pairwise extending across below each of the two elongated track profiles of the particular line and aligned with the opposite pair of shaft parts, which inner ends of the four shaft parts are each having a radially extending arm, and which adjacent arms each have a knee-joint and are pairwise joined by a common, horisontal mould-lifting part.

When the next mould in the row of continuously moving moulds at the first straight line closes up to the particular lifting-lowering device, the mould is engaged, from below, by the two horizontal knee-joint parts and lifted, still being in horizontal position, up to the cross-conveyor.

Simultaneously, a mould has entered a lifting-lowering device at the point of engagement of the same cross-conveyor with the other straight line, and by the engagement of the two particular horizontal mould-lifting parts, the mould is moved into an open space between moulds continuously moving at the other line.

The open space was available, as a mould was already lifted up from the flow of moulds in the other line and to the second cross-conveyor, which simultaneously transported a mould into the lifting-lowering device at its point of engagement with the first line, so that this mould was engaged by the particular mould-lifting part and lowered into a space between moulds in the first line.

The first and the second straight lines have in common the same number of treatment sections as one prior art long straight line, however, the length of the required space is reduced up to 40-50% in comparison to the prior art lines, still maintaining the same process possibilities.

Furthermore, production may be kept running at only one of the two lines of the inventive solution, so that maintenance or readjustments of process stations can be performed before future productions. Production capacity is advantageously utilized during such periods.

Hereby is provided a confectionery food production apparatus, having moulds driven by endless chains in straight lines, requiring much lesser extension and consequently less space than before. The length could be reduced as much as 40-50%, however, yet could the same high capacity and degree of utility in production be achieved. Furthermore, the inventive solution has a higher degree of production flexibility than the prior art lines of the chain-driven type.

When the shaft parts are arranged in the same horizontal plane, the arms have equal length, and the shafts are driven by at least one common, programmable servo-motor, so that the direction of rotation of the shaft parts are the same as the direction of movement of the moulds, it is ensured by a simple and reliable geometrical construction, that the common mould-lifting parts are maintained in horizontal position during a full rotation of the shaft parts.

During part of the rotation the knee-joint have the same direction of movement as the moulds in the line, which in combination with the common programmable servo-motor provide that the moulds are engaged from below in a firm and safe manner without risk of losing the mould orientation. This applies in both situations when the moulds are either lifted up from the row of moulds in a line, or when the moulds are lowered into a gap between other moulds in a line.

The inventive embodiment may even then be applied both as a lifting device and as a lowering device. Both ensuring highly accurate and reliable positioning of the moulds.

When the configuration of the first straight line and of the second straight line are such, that the direction of movement of the moulds of the first line is the opposite of that of the second line, and the direction of movement of the moulds at the first cross-conveyor is the opposite of that of the second cross-conveyor, then, the conveyors may be arranged in parallel to each other, and furthermore in the same geometric plane.

This ensures, that when a mould has been lifted up from either of the lines, the available space is soon filled out by a mould returning from the other line. Furthermore, the embodiment has a simple construction-wise.

According to a further advantageous embodiment, the outer ends of the four shaft parts are each having a curve sheave, each lifting-lowering device further comprises a pair of parallel supporting tracks arranged across and above the elongated track profiles of the particular line and is having a mutual distance, which ends of supporting tracks are carried at the outsides of the elongated track profiles by wagons, each of which wagons further having a downward extending arm part, the lower end of which arm part having a knob, to be engaged by the adjacent curve sheave so that the mutual distance is regulated.

During rotation of the shaft parts, each curve sheave engages with the adjacent knob of the arm part, so that the parallel supporting tracks becomes wider from each other. The particular mould is then lifted up in-between the tracks by the further rotation of the shaft parts whereafter the curve sheaves releases the knobs whereby the wagons and consequently the tracks retracts to the slightest width between them thereby supporting the mould being ready for transport at the cross-conveyor.

When the inventive embodiment is arranged to receive a mould from a conveyor, the tracks are in the closest mutual position as the mould closes up from the cross-conveyor and in-between the tracks.

Then, by the further rotation of the shaft parts, the mould is carried in towards free space in the row of moulds. The curve sheaves engage the knobs and the tracks spread apart from the mould, which is then placed in the free space.

The embodiment ensures, that the rotation of the shaft parts control both the circular movement of the common mould-lifting part as well as the spreading-closing movements of the particular tracks, releasing or supporting the mould.

According to a further advantageous embodiment, the curve-sheaves are angularly mounted at the shaft-parts in relation to the radially extending arms, so that when the arms are in positions, by which the common mould-lifting parts lift up the particular mould, then, the curve-sheaves have engaged the wagons to the largest distance in-between the two parallel supporting tracks. When the arms extend vertically upwards, the mould-lifting parts are in their uppermost positions, then, the curve-sheaves engage the wagons to the slightest distance in-between the two parallel supporting tracks, which then supports the mould. The embodiment is simple, effective and reliable in production.

When the angular section of the curve sheaves, having enlarged radius, covers an angle of 90° +/- 10°, and the leading parts of the curve sheaves, having maximum radius, engage the knobs at the lower ends of the wagon arms, the angular position of the adjacent mould-lifting arms are within +/- 25° of a line through that position.

It is then ensured, that there is sufficient time for the mould to pass in between the two tracks being spread apart in their widest positions.

Both tracks are displaced the same distance simultaneously during rotation of the shaft parts, when the knobs and the shaft parts are arranged in the same horizontal plane, and that the curve sheaves connected by the same common mould lifting-part are rotated 180° in relation to each other on their respective shaft parts.

When each of the two cross-conveyors comprises two elongated, parallel, track profiles having a mutual distance adapted to carry a row of moulds, and above each track profile is arranged an elongated support structure with an endless chain, the support structure at both ends extends a longer distance further than the particular track profile fitting in over the width of the line, and the chains are stretched between two sprocket wheels, arranged at the ends of the support structure and each driven by a common or separate motor, then, the chains are each carrying a plurality of mould pusher pins.

The cross-conveyors may then easily be fitted over the two lines or removed again. The construction is simple and very effective in use as the mould-pusher pins are reliable to push the moulds across the conveyors.

The ends of the track profiles of the cross-conveyors are arranged in line with the inner ends of the two parallel supporting tracks in their closest position carrying a mould. The moulds are then easily engaged by the mould pusher pins and pushed on to the conveyor tracks.

The invention further applies to the advantageous use of two straight confectionery lines, each depositing confectionery mass in cavities in an underlying row of continuously moving confectionery moulds supported and guided at their opposite sides by the insides of elongated track profiles, each of which profiles are also carrying a respective endless chain, which chains are stretched between a plurality of sprocket wheels, arranged at the particular line and each driven by at least one sprocket wheel and a motor, which chains are each carrying a plurality of inwardly extending pins engaging with recesses in the neighboring sides of the moulds, and which straight lines each comprise a mass depositor unit and a cooling section, in parallel arrangement of the two lines, and in combination with two mutual cross-conveyors adapted to carry moulds forth and back between the two lines, for manufacturing chocolate articles.

The invention is explained further below under reference to preferred embodiments as well as the drawing, in which
fig. 1a is a schematic view of the food production apparatus according to the invention, seen from the side,
fig. 2 is a cross-conveyor unit from the production apparatus of fig. 1, seen in perspective and in enlarged view,
fig. 3a is one of four mould lifting-lowering devices, from the production apparatus of fig. 1, seen in perspective and enlarged view,
fig. 3b is a side view of a vertical section parallel to the line, seen in axial-direction of the shaft-parts, from the right side of the line relatively to the direction of movement of the moulds,
fig. 3c is a side view of a vertical section parallel to the line, seen in axial-direction of the shaft-parts from the opposite left side of the line, relatively to the direction of movement of the moulds,
fig. 4 is the device of fig. 3, arranged as a mould lifting-device at the tracks of one of the lines of the apparatus of fig. 1, seen in perspective as in fig. 3,
fig. 5 is a part of the cross-conveyor of fig. 2, seen in a perspective and enlarged view,
fig. 6 is a schematic and perspective view of the two lines and the two cross-conveyors and the directions of movement of the moulds,
fig. 7 a-f disclose different positions of the lifting device of fig. 3a and 4, seen from the side and in axial-direction of the shaft-parts, and
fig. 8 a-d disclose different positions of the device of fig. 3a, arranged as a mould lowering-device at the tracks of either of the lines of the apparatus, seen as in fig. 7.

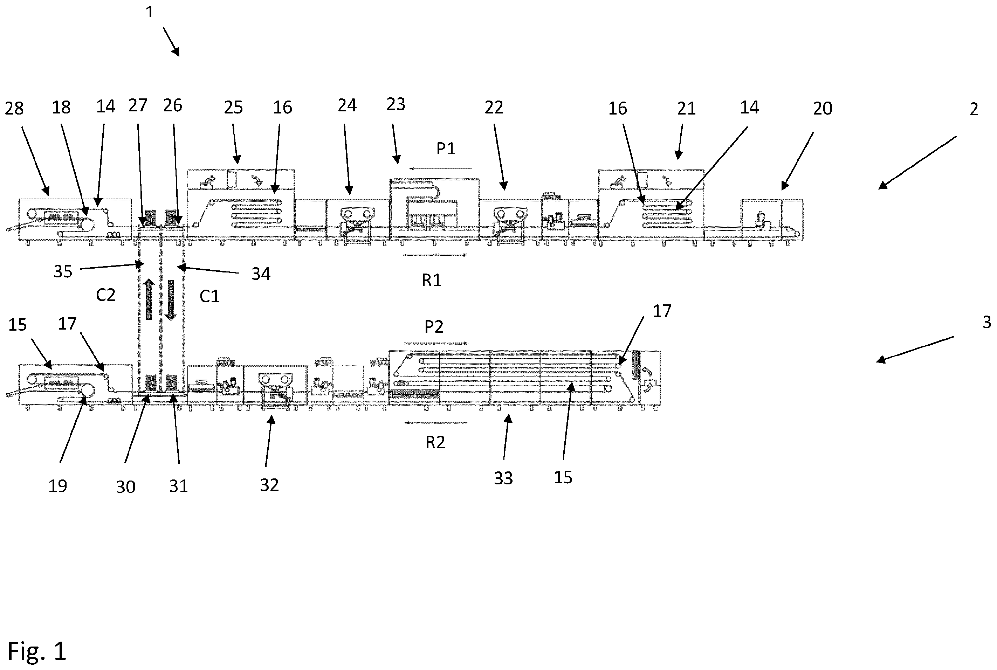

The inventive confectionery food production apparatus 1 disclosed in figure 1a is adapted for continuous high-volume manufacturing of articles of a confectionery mass, such as any type of tempered chocolate mass. By solid moulding, such as of for example tablets, with or without ingredients, or by shell moulding with center-fillings and bottoming such as of pralines with various fillings.

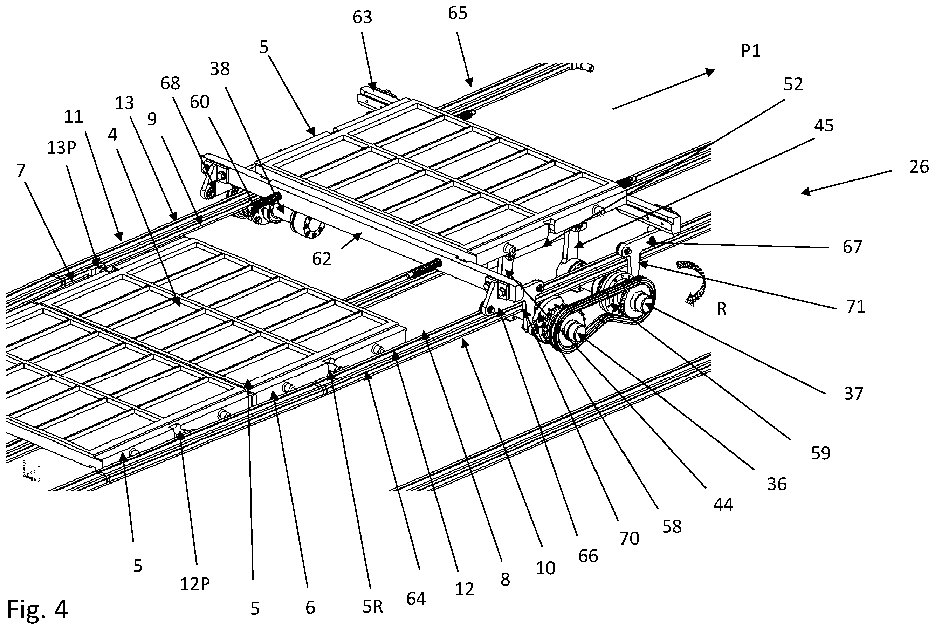

The apparatus 1 schematically disclosed in figure 1a is comprising a first straight line 2 and a second straight line 3, both depositing confectionery mass in cavities 4 in an underlying row of continuously moving confectionery plastic moulds 5. The moulds 5 are supported and guided at their opposite sides 6, 7 by the insides 8, 9 of elongated track profiles 10, 11, each of which two profiles 10, 11 are also carrying a respective endless chain 12, 13, as disclosed in more detail in figure 4. This applies for both lines 2 and 3 disclosed in figure 1.

As figure 1 is a much schematic view, the extension of the chains 12, 13, and consequently the flow of the particular mould travel is represented by the schematically disclosed chain extension and mould path 14 for the line 2, and the chain extension and mould path 15 for the line 3.

The chains 12, 13 are stretched between a plurality of sprocket wheels, symbolized in figure 1 by the chain extensions and mould path 14, 15, and the sprocket wheels 16, 17 for the respective lines 2, 3. The chains are each driven by at least one motor with sprocket wheel schematically disclosed by sprocket wheel and motor 18, 19 for the respective line 2, 3.

The chains 12, 13 of each chain extension and mould path 14, 15 of the respective line 2, 3, are each carrying a plurality of inwardly extending pins 20 engaging with recesses 21 in the neighboring sides 6, 7 of the moulds 5. Ensuring the safe and accurate travel of the moulds 5 with deposited chocolate mass along the respective path 14, 15. The moulds 5 are easily placed in between the two opposite track profiles 8, 9 or lifted up therefrom as well.

The direction of movement of the moulds 5 and therefore the process order for the upper straight line 2 is from right to the left as indicated by arrow P1. The return of the empty moulds by the endless chain path 14 is disclosed by arrow R1.

The direction of movement of the moulds 5, and therefore the process order for the lower straight line 3, is from the left to the right, as indicated by arrow P2. The return of the empty moulds by the endless chain path 15 is disclosed by arrow R2.

The first straight line 2 comprises, mentioned in the process order from the right towards the left;
an decoration unit with a depositor 20 for premature decoration in the empty mould cavities 4 and a cooling section 21,
a shell and center filling section with a depositor 22 for shell mass,
a shell cold-pressing section 23,
a further depositor 24 for center-fillings and
a cooling section 25,
a first lifting lowering device 26 and
a second lifting-lowering device 27, as well as
a de-moulding section 28 adapted to clear the fabricated articles from the moulds 5.

The second straight line 3 has the opposite process order and comprises at the leftmost end a de-moulding section 29 adapted to clear the fabricated articles from the moulds 5.

Thereafter is arranged a first lifting-lowering device 30 and a second lifting-lowering device 31.

Then follows, mentioned in the process order from the left towards the right;
a depositor 32 for the same mass as the shells and for covering the bottoms thereof, as well as a cooling section 33 for the end-cooling of the ready pralines.

The first straight line 2 and the second straight line 3 are arranged in parallel to each other.

The first and secondary straight lines 2, 3 are interconnected via two cross-conveyors 34, 35 adapted to carry the confectionery moulds 5 forth and back between the two lines 2,3. At the points of engagement with the cross-conveyors 34, 35, the first and secondary lines 2, 3 comprise the lifting-lowering devices 26, 27 and 30, 31.

The cross-conveyor 34 connects the device 26 of the first line 2 with the device 31 of the second line 3. As the device 26 is arranged as a lifting device, and the device 31 is arranged as a lowering device, the direction of transportation of the moulds 5 at the conveyor 34 is as disclosed by the arrow C1, from the first line 2 and to the second line 3.

The second cross-conveyor 35 connects the device 30 of the second line 3 with the device 27 of the first line 2. As the device 30 is arranged as a lifting device, and the device 27 is arranged as a lowering device, the direction of transportation of the moulds 5 at the second conveyor 35 is as disclosed by the arrow C2, from the second line 3 and to the first line 2.

The lifting devices 26, 30 are adapted to lift up a passing mould 5 from the particular straight line 2, 3 and onto a cross-conveyor 34, 35, as described in further detail in the following. The lowering devices 31, 27 are adapted to lower a passing mould from the cross-conveyor 34, 35 and into a free opening in-between the row of moulds 5 in the particular first or second straight line 3 or 2.

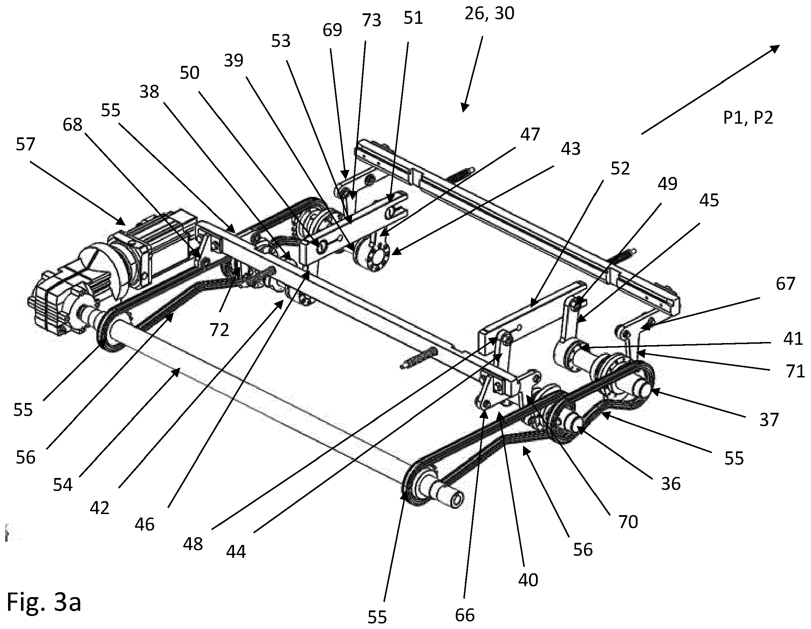

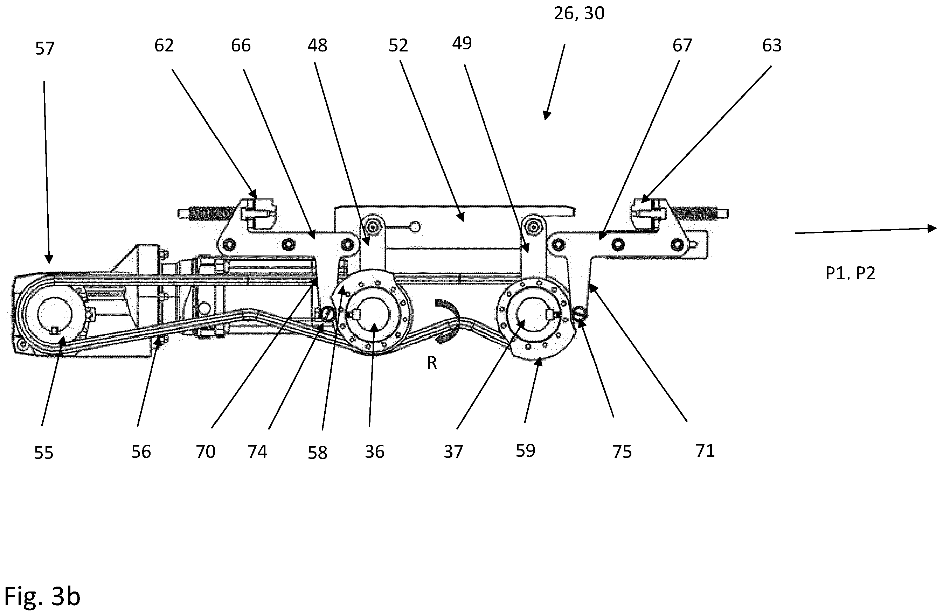

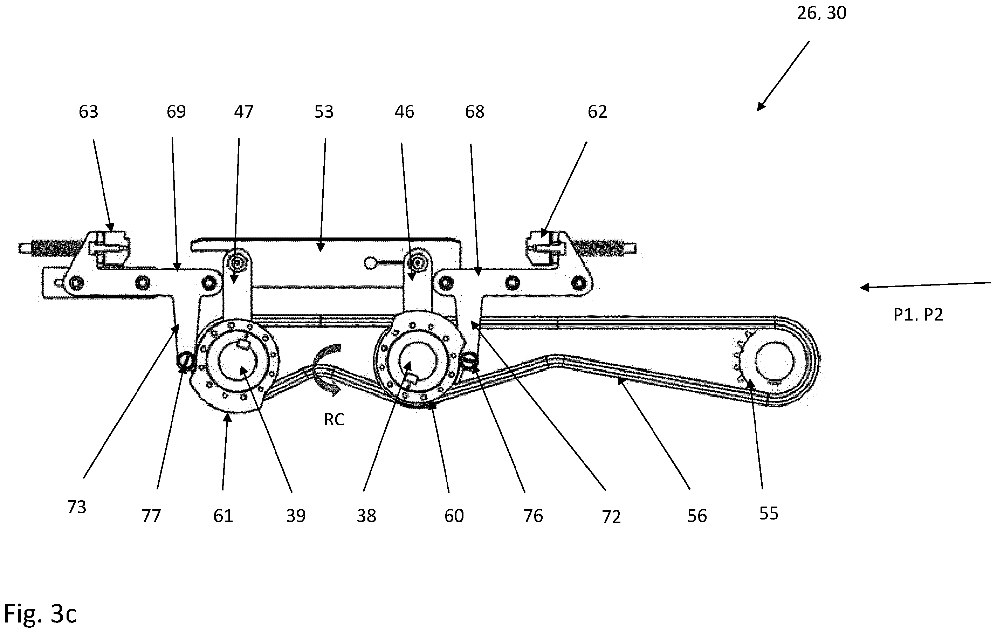

Generally, each of the lifting-lowering devices 26, 27 and 30, 31 are comprising four shaft parts 36, 37; 38 ,39 arranged pairwise. The first pair of shaft parts 36, 37, which are extending across below one of the two elongated track profiles 10 of the particular line 2 or 3,is aligned with the opposite pair of shaft parts 38, 39, which are extending across below the opposite track profile 11, as disclosed in figures 3 a-c, 4.

The inner ends 40, 41, 42, 43 of the four shaft parts 36, 37, 38, 39 are each having a radially extending arm 44, 45, 46, 47. The adjacent arms 44, 45 ; 46, 47 does each have a knee-joint 48, 49 and 50, 51 and are pairwise joined by a common, horisontal mould-lifting part 52, 53.

All four shaft parts 36, 37, 38, 39 are arranged in the same horizontal plane, and the four radially extending arms 44, 45, 46, 47 have equal length.

A long shaft 54 extending from under the track profile 10, and to under the opposite track profile 11, is via sprocket wheels 55 and chains 56 connected with both pairs of shaft parts 36, 37 and 38, 39. A servo-motor 57 rotates the long shaft 54 and ensures, that all four shafts are driven simultaneously with the same angular velocity.

The common, programmable servo-motor 57 is regulated, so that the direction of rotation R of all the shaft parts 36, 37, 38, 39 is the same as the direction of movement P1 of the moulds 5, as disclosed in fig. 4. It means, that the direction of rotation R is clockwise, when the flow of moulds 5 is regarded as in fig. 4, so that the direction of movement P1 is towards the right.

The outer ends of the four shaft parts 36, 37, 38, 39 are each having a fixedly mounted curve sheave 58, 59, 60, 61, respectively.

Each lifting-lowering device 26, 27 are further comprising a pair of parallel supporting tracks 62, 63 arranged across and above the elongated track profiles 10, 11 of the particular line 2, 3. The tracks are having a mutual distance, which may be regulated to be larger than the width of the moulds 5, or slightly smaller thereby supporting the moulds as explained below.

The ends of the supporting tracks 62, 63 are carried at the outsides 64, 65 of the elongated track profiles 10, 11 by wagons 66, 67, 68, 69.

Each of the wagons 66, 67, 68, 69 are further having a downwardly extending arm part 70, 71, 72, 73, the lower ends of the arm parts are each having a knob 74, 75, 76, 77 to be engaged by the adjacent curve sheave 58, 59, 60, 61, respectively.

Both the knobs and the wagons could have some kind of bearings for minimizing the friction at their engagement with the curve sheaves and the track profiles, respectively.

All of the four knobs 74, 75, 76, 77 and the four shaft parts 36, 37, 38, 39 are arranged in the same horizontal plane. The curve sheaves 58, 59; 60, 61 connected by the same common lifting-part 52; 53 are rotated 180° in relation to each other on their respective shaft parts 36, 37; 38, 39.

When studying the embodiment of the inventive lifting-lowering device disclosed in figures 3a-c and 4, it is recognized, that the left side of the device 26, as disclosed in figure 3c, is a mirrored image of the right side of the device 26, as disclosed in figure 3b. The mirror plane is extending vertically in the direction of movement P1 along the center between the two sides.

When the embodiment of the lifting device 26 is to be applied as a lowering device 27, 31 in the positions disclosed in figure 1, the device 26 is simply turned 180°at the line extension, and the direction of rotation of the shaft parts are changed to the opposite, so that it follows the direction of mould movement.

Consequently, it is a major advantage, that it is only necessary to manufacture one embodiment of the lifting-lowering device, which could then be applied in all position of a line. It makes the whole concept of the inventive lifting-lowering device very flexible.

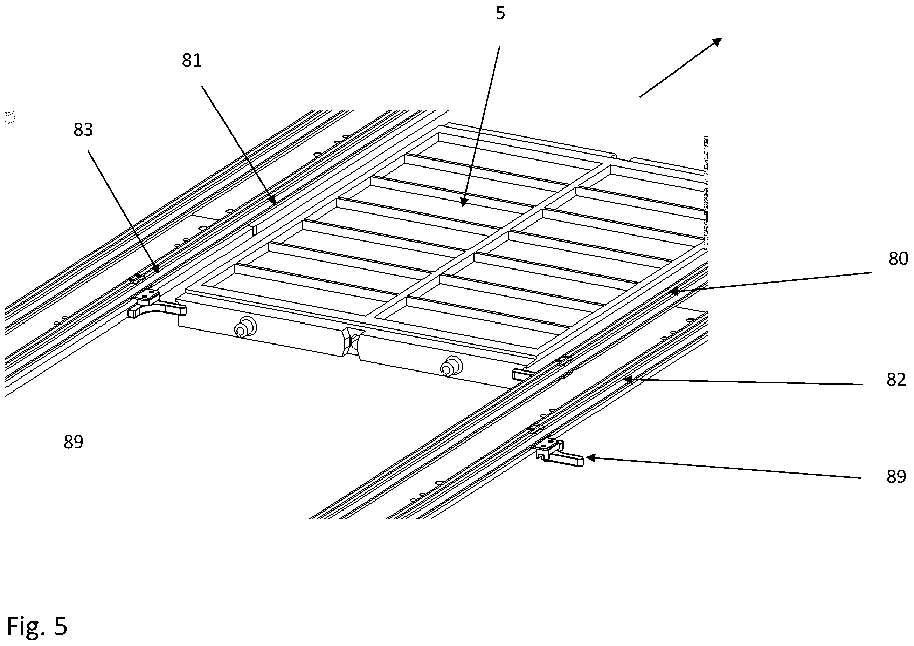

The curve-sheaves 58, 59, 60, 61 are angularly mounted at the shaft-parts 36, 37, 38, 39 in relation to the radially extending arms 44, 45, 46, 47, so that when the arms are in positions, by which the common mould-lifting parts 52, 53 lift up the particular mould 5, then, the curve-sheaves 58, 59, 60, 61 have engaged the knobs 74, 75, 76, 77 and consequently moved the wagons 66, 68 in directions away from the opposite wagons 67, 69. The largest distance in-between the two parallel supporting tracks 62, 63 is then available for the mould 5, being lifted up by the two horizontal mould-lifting parts 52, 53, to pass up between the tracks 62, 63 during the further rotation of the shaft parts 36, 37, 38, 39, as disclosed in figures 5c, d.

When the arms extend vertically upwards, so that the mould-lifting parts 52, 53 are in their uppermost positions, as disclosed in figures 3 a-c, 4 and 5e, then, the curve-sheaves 58, 59, 60, 61 engage the knobs 74, 75, 76, 77, whereby the wagons 66, 67, 68, 69 are moved in towards the slightest distance in-between the two parallel supporting tracks 62, 63 carrying the mould 5.

The angular section of the curve sheaves 58, 59, 60, 61 with enlarged radius covers advantageously an angle of 90° +/- 10°. Then, when the leading parts 78, 79 of the curve sheaves 58, 59, having maximum radius, engages the knobs 74, 75 at the arm parts 70, 71 of the wagons 66, 67, then, the angular positions of the adjacent mould-lifting arms 44, 45 is within +/- 25° of a line through that position, as disclosed in figure 5b. The knobs 74, 75, 76 and 77 and the shaft parts 36, 37, 38, 39 are arranged in the same horizontal plane, and the curve sheaves 58, 59; 60, 61 connected by the same common mould lifting-part 52; 53 are rotated 180° in relation to each other on their respective shaft parts 36, 37; 38, 39.

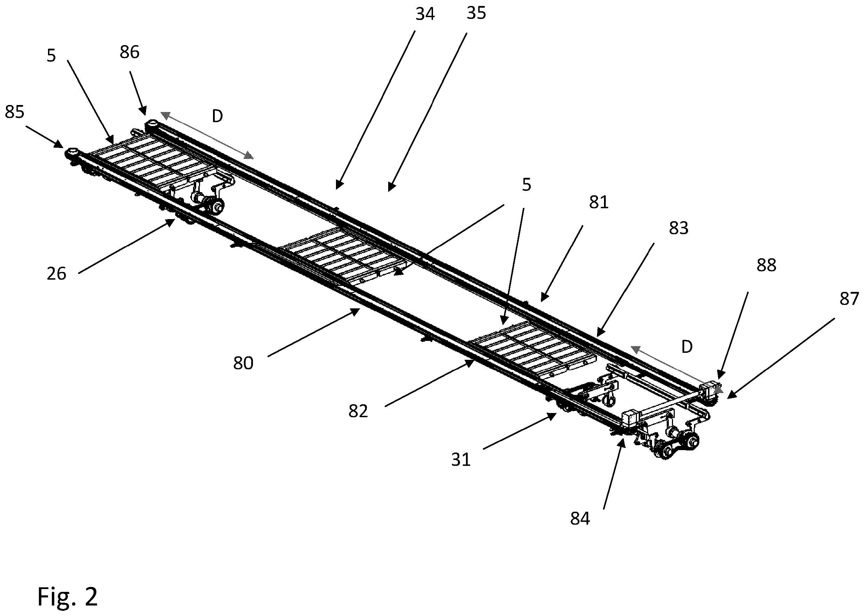

When a mould 5 has been lifted up to the uppermost position by the horizontal lifting parts 52, 53, as disclosed in figure 3 a-c and 4, then, the mould 5 is overtaken by the cross-conveyors 34, 35 as disclosed in figures 2 and 5.

The two cross-conveyors 34, 35 are identical and are each comprising two elongated, parallel track profiles 80, 81, having a mutual distance adapted to carry a row of moulds 5. Above each track profile is arranged an elongated support structure 90, 91 with an endless chain 82, 83. At both ends the support structure 90, 91 extends a longer distance D further than the particular track profile 80, 81, to fit in over the width of the line 2, 3.

The respective endless chains 82, 83, are each stretched between a pair of sprocket wheels 84, 85; 86, 87, arranged at the ends of the support structures 90, 91. The sprocket wheels are driven by a common motor 88. Each of the two chains 82, 83 are carrying a plurality of inwardly extending mould-pusher pins 89, as in figure 5.

The ends of the track profiles 80, 81 of the cross-conveyor 34, 35 are arranged in line with the inner ends of the two parallel mould-supporting tracks 62, 63 in their closest mutual position carrying a mould 5. Then, it is easy for the cross-conveyors to take over a mould 5 from one of the lifting devices 26, 30, or to deliver a mould 5 to one of the lowering devices 27, 31. As the extensions of the support structures 90, 91 covers the width of the lifting device, the mould-pusher pins 89 simply pushes the moulds 5 smoothly further on.

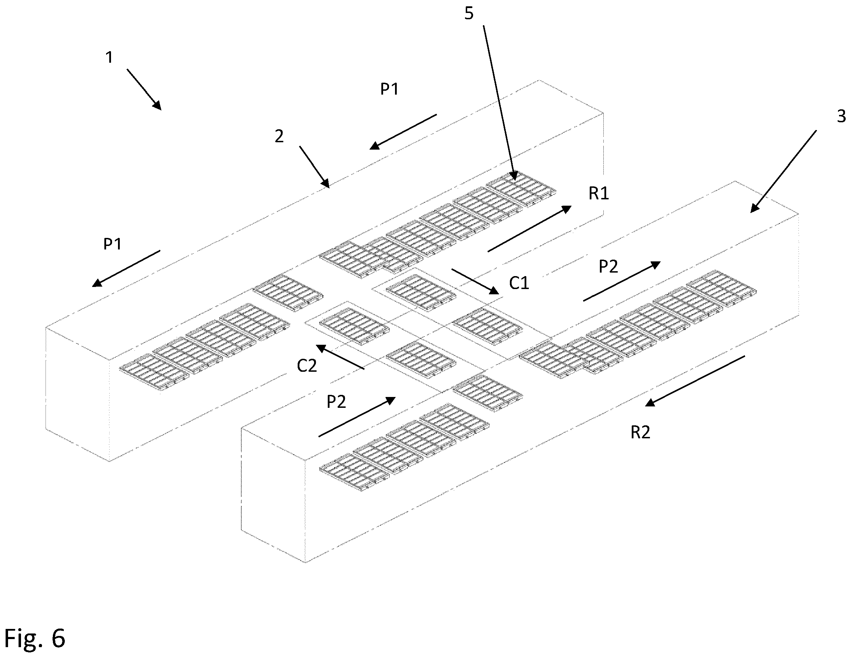

The transportation of the moulds 5 in the production apparatus 1, during manufacturing of the chocolate articles, is explained referring to the schematical figure 6.

The lines 2, 3 are disclosed as "boxes" drawn by stippled lines. Only the central part of upper layer of moulds 5 passing through the lifting-lowering devices are disclosed, for sake of simplicity. In the line 2 the moulds 5 are transported in the direction P1 through the process sections. The are returned by the endless chain in the opposite direction R1. In the line 3 the moulds 5 are transported in the direction P2 through the process sections. They are returned by the endless chain in the opposite direction R2.

When a mould 5 reaches the lifting device in line 2, the mould is lifted and transported by the cross-conveyor in the direction C1 towards line 3. The moulds are received by the lowering device of line 3 and lowered into a free space in the row of moulds transported in the direction P2. Prior to creation of that space, a mould was lifted up and submitted in the direction C2 towards the other line 2, where the mould was lowered into the available space in the row of moulds 5.

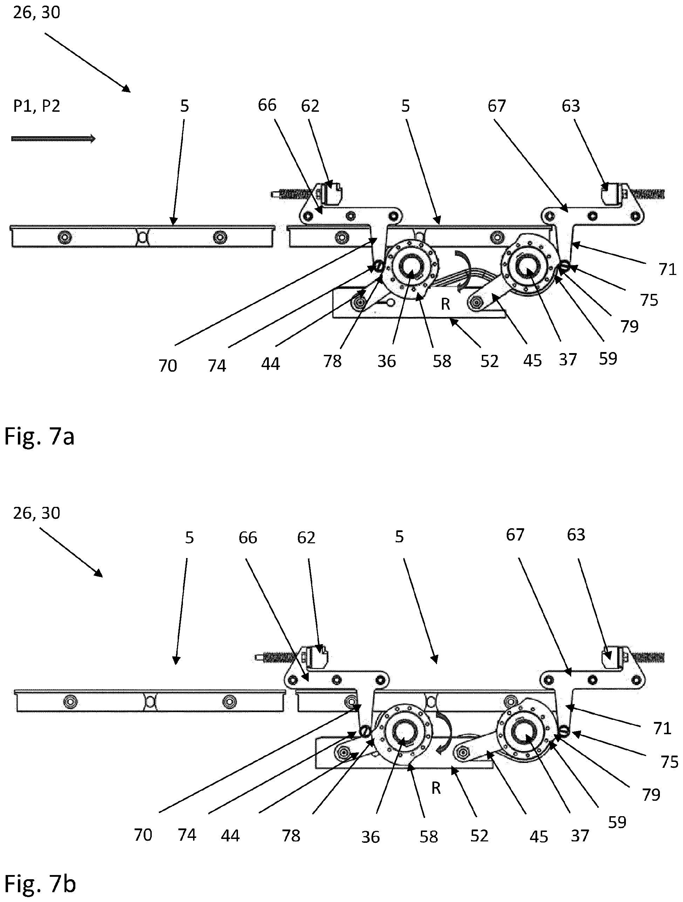

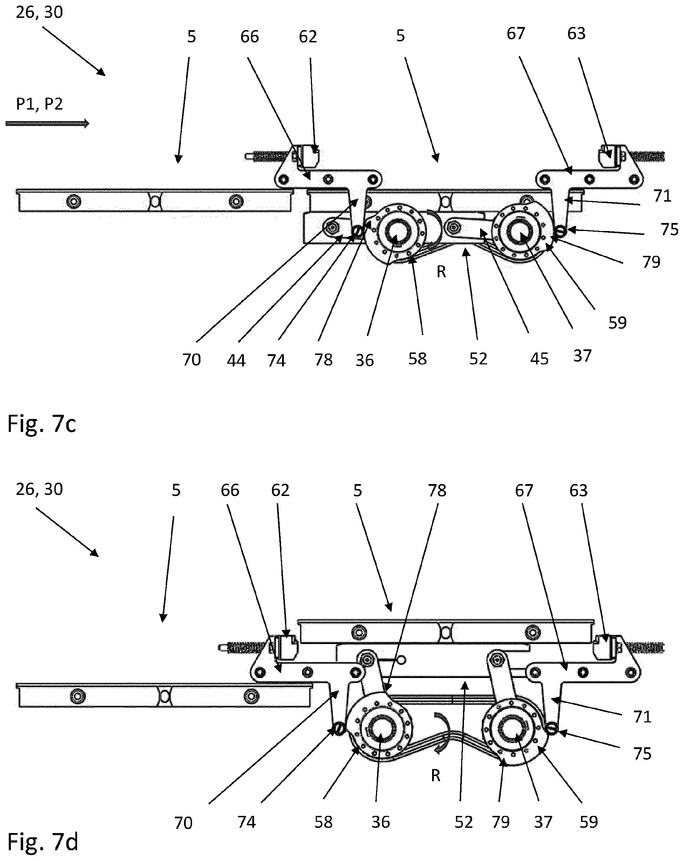

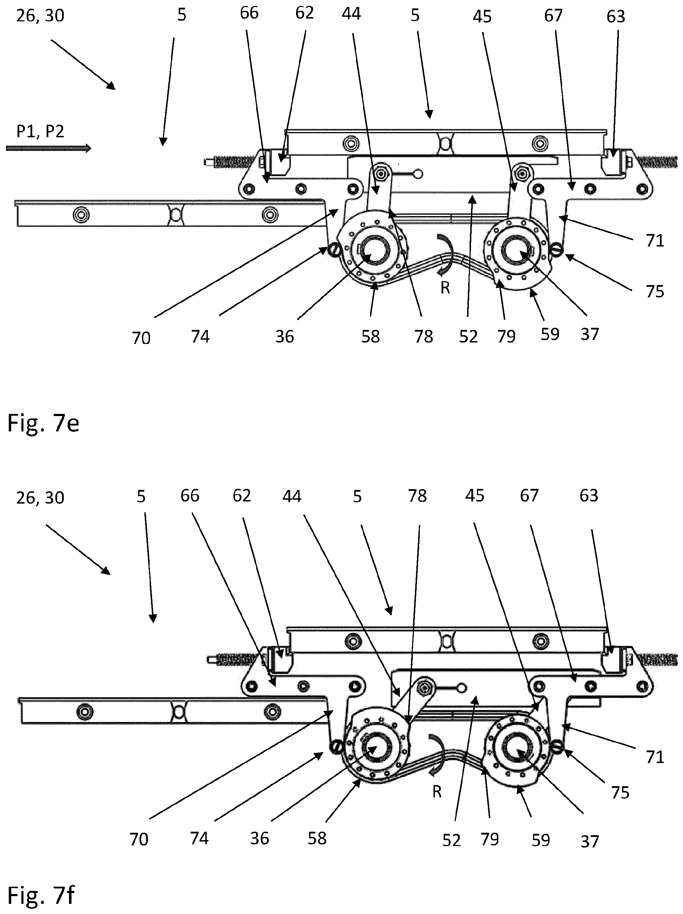

The function of the lifting version of the mould lifting-lowering device 26, 30 is explained in more detail referring to figures 7 a-f.

In the position, disclosed in figure 7a, the leading parts 78, 79 of the curve sheaves 58, 59 are engaging the knobs 74, 75. The mould lifting-parts 52, 53 are far below the row of moulds 5.

During further clockwise rotation R of the shaft parts 36, 37, both the arms 44, 45 and the curve sheaves 58, 59 are further rotated by the shaft parts as disclosed in figure 7b. Consequently, the common horizontal mould-lifting parts 52, 53 are closing up under the row of moulds 5, which are continuously moving in the direction P1, P2, and tracks 62, 63 are moved to their most spread-apart position.

As disclosed in figure 7c, further rotation of the shaft parts 36, 37 bring the horizontal mould-lifting parts 52, 53 to engagement with the particular mould 5, passing above the device. By even further rotation of the shaft parts 36, 37, the mould 5 is lifted up and passes in a circular movement up in-between the two tracks 62, 63, as disclosed in figure 7d. The curve sheaves 58, 59 still engage the knobs 74, 75 with their largest radius.

By the further rotation of the shaft parts 36, 37, the curve sheaves soon engage with their smallest diameter, so that opposite wagons 66, 67 are quickly moved towards each other to their closest position. The mould 5 is now supported by the tracks 62, 63, as disclosed in figure 7e. The mould is soon engaged by the mould pusher pins 89, which by the travel of the endless chains 82, 83 brings the mould 5 further on at its travel over the cross-conveyor 34, 35 towards the other line 2, 3.

Further rotation of the shaft parts 36, 37 brings the mould-lifting parts 52, 53 downwards to start a new cycle of mould lifting.

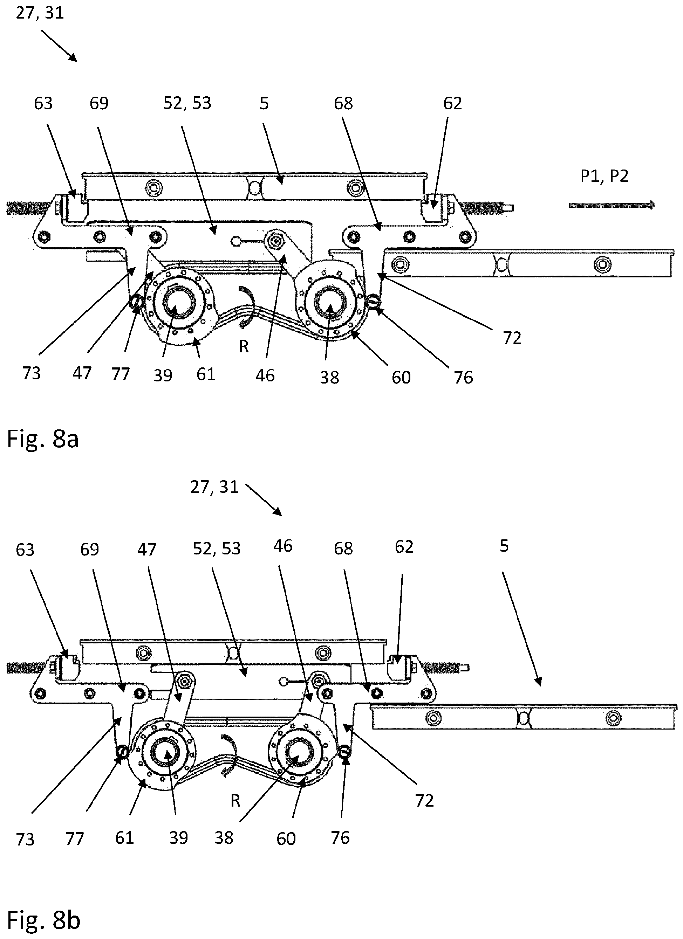

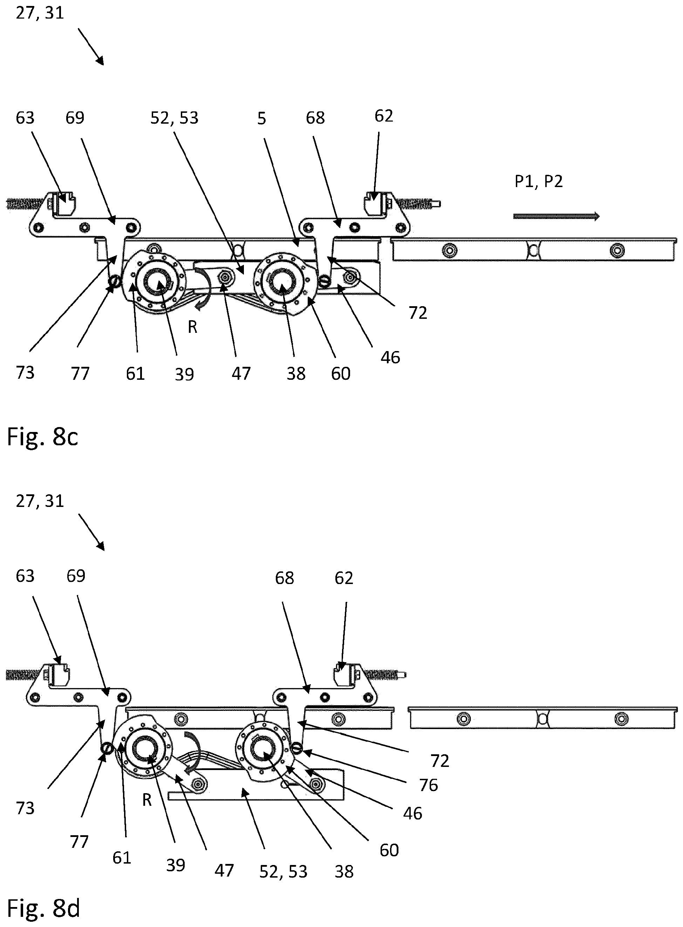

The function of the embodiment as a lowering version of the mould lifting-lowering device 27, 31 is explained in more detai,l referring to figures 8 a-f.

In the figures 8 a-d the lifting-lowering device is regarded from the same side, as in figure 3c. However, as easily depicted, the direction of rotation of the shaft parts 38, 39 are now amended to clockwise instead of counter-clockwise, and the direction of travel of the moulds are to the right P1, P2, instead of to the left as in figure 3c.

When a mould 5 has travelled across the cross-conveyor 34, 35 and reached the other end above the lowering device 27, 31, the mould lifting device 52, 53 is closing up below the mould 5 by the rotation of the shaft parts 38, 39, as in figure 8a.

Further rotation brings the mould-lifting parts 52, 53 up under the mould 5 to support it, as the tracks 62, 63 are spread apart by the engagement of the curve sheaves 60, 61 with the knobs 76, 77, figure 8b.

While the tracks 62, 63 are at the maximum distance from each other, further rotation of the shaft parts 38, 39 brings the mold supporting parts 52, 53 further down, so that the mould 5 fits in a free space between the row of moulds. Further rotation brings the mould 5 to support at the elongated track profiles 8, 9 of the line 2, 3, i.e figure 8c.

The even further rotation brings the horizontal, mould lifting parts 52, 53 further down and free of the moulds, towards a new cycle, as depicted in figure 8d.

The first and the second straight lines 2, 3 have in common the same number of treatment sections as one traditional, long, straight line. However, the length of the required space is reduced up to 40-50% in comparison to these prior art lines.

A further advantage is, that the cross-conveyors can be stopped. Production may then be kept running at only one of the two lines, or at both lines 2, 3 simultaneously. If only one of the lines is in production, the other could be in maintenance, or change of some of the process stations such as the depositor could be carried out before the next production run.

If both lines are running simultaneously, without the cross-conveyors working, the moulds could be changed at one of the lines. The shape of the articles produced at that one line could then differ from the articles produced at the other line. Major tablets with ingredients could for example be produced at the first line and smaller tablet moulded as solid chocolate could be produced at the other line, simultaneously. This is a great advantage for the manufacturer, as two orders for different articles could be fulfilled simultaneously, at a high production rate.

The plastic moulds 5 of the inventive manufacturing apparatus 1 depicted in the drawings and described above, has the so-called 700mm x 18" size. It means, that the moulds 5 has the dimension of 700 mm in the width. Corresponding to the distance between the track profiles 10, 11 of the lines 2, 3. The other dimension of the moulds are approximately 461 mm, which is in the travel direction of the moulds. With this size of moulds, the depicted apparatus 1 has a maximum production capacity of between 2000 and 2500 kg/hour for chocolate articles, such as solid moulded tablets or similar. When more complicated articles such as pralines are produced, the maximum capacity is around 1500-2000 kg/hour. The length of the apparatus is reduced with 40-50%, depending on the choice of extra process stations, in comparison to one long line as by the prior art.

In total, the inventive confectionery chain-driven production apparatus both requires much lesser length in the production facilities, and simultaneously provides the manufacturer with an improved versatility, which enables a more diverse product portfolio.
- 1:: confectionery food production apparatus
- 2:: first straight line
- 3:: second straight line
- 4:: cavities in moulds
- 5:: plastic moulds
- 5R:: mould recess
- 6:: mould side
- 7:: opposite mould side
- 8:: inside of elongated track profile of line
- 9:: opposite inside of elongated track profile of line
- 10:: track profile of lines
- 11:: opposite track profile
- 12:: endless chain
- 12P:: pins
- 13:: opposite endless chain
- 13P:: pins
- 14:: mould and chain path
- 15:: mould and chain path
- 16:: sprocket wheels
- 17:: sprocket wheels
- 18:: sprocket wheel and motor
- 19:: sprocket wheel and motor
- 20:: depositor for decoration
- 21:: cooling section
- 22:: depositor for shell mass
- 23:: shell cold-pressing section
- 24:: depositor for center filling
- 25:: cooling section
- 26:: lifting-lowering device
- 27:: lifting-lowering device
- 28:: de-moulding section
- 29:: de-moulding section
- 30:: lifting-lowering device
- 31:: lifting-lowering device
- 32:: depositor for bottoms of shells
- 33:: cooling section
- 34:: cross-conveyor
- 35:: cross-conveyor
- 36:: shaft part
- 37:: shaft part
- 38:: shaft part
- 39:: shaft part
- 40:: inner end
- 41:: inner end
- 42:: inner end
- 43:: inner end
- 44:: radially extending arm
- 45:: radially extending arm
- 46:: radially extending arm
- 47:: radially extending arm
- 48:: knee-joint
- 49:: knee-joint
- 50:: knee-joint
- 51:: knee-joint
- 52:: common, horizontal mould-lifting part
- 53:: common, horizontal mould-lifting part
- 54:: long shaft
- 55:: sprocket wheels
- 56:: chains
- 57:: servo-motor
- 58:: curve sheave
- 59:: curve sheave
- 60:: curve sheave
- 61:: curve sheave
- 62:: supporting track
- 63:: supporting track
- 64:: outside of elongated track profile
- 65:: outside of track profile
- 66:: wagon
- 67:: wagon
- 68:: wagon
- 69:: wagon
- 70:: arm part
- 71:: arm part
- 72:: arm part
- 73:: arm part
- 74:: knob
- 75:: knob
- 76:: knob
- 77:: knob
- 78:: leading parts of the curve sheave 58
- 79:: leading parts of the curve sheave 59
- 80:: conveyor track profile
- 81:: conveyor track profile
- 82:: endless chain
- 83:: endless chain
- 84:: sprocket wheel
- 85:: sprocket wheel
- 86:: sprocket wheel
- 87:: sprocket wheel
- 88:: motor
- 89:: mould pusher pins
- 90:: support structure
- 91:: support structure

- P1, P2:: mould flow and process direction
- R1, R2:: direction of return of moulds
- C1, C2:: conveyor mould transport direction
- R:: rotation clockwise
- RC:: counter-clockwise rotation
- D:: conveyor extension length over line width

## Claims

1. Confectionery food production apparatus (1) comprising a first straight line (2) depositing confectionery mass in cavities (4) in an underlying row of continuously moving confectionery moulds (5) supported and guided at their opposite sides (6, 7) by the insides (8, 9) of elongated track profiles (10, 11), each of which profiles (10, 11) are also carrying a respective endless chain (12,13), which chains (12, 13) are stretched between a plurality of sprocket wheels (16), arranged at the line (2) and each driven by at least one sprocket wheel and a motor (18), which chains (12, 13) are each carrying a plurality of inwardly extending pins (12P, 13P) engaging with recesses (5R) in the neighboring sides (6, 7) of the moulds (5), and which first straight line (2) comprises a mass depositor unit (22) and a cooling section (21),
**characterized in, that** the apparatus (1) comprises a further secondary, straight line (3) comprising the same as above and arranged in parallel to the first line (2), and which first and secondary straight lines (2, 3) are interconnected via two cross-conveyors (34, 35) adapted to carry the confectionery moulds (5) forth and back between the two lines (2, 3), that at the points of engagement with the cross-conveyors (34, 35), the first and secondary lines (2, 3) comprise lifting-lowering devices (26, 27, 30, 31), which are adapted to lift up a passing mould (5) from the particular straight line (2, 3) and onto a cross-conveyor (34, 35), or to lower a mould (5) from the cross-conveyor (34, 35) and into a free opening in-between the moulds (5) in the particular straight line (2, 3), or are adapted to both, and which lifting-lowering devices (26, 27, 30, 31) are further comprising four shaft parts (36, 37, 38, 39) arranged pairwise extending across below each of the two elongated track profiles (10, 11) of the particular line (2, 3) and aligned with the opposite pair of shaft parts (36, 37; 38, 39), which inner ends (40, 41, 42, 43) of the four shaft parts (36, 37, 38, 39) are each having a radially extending arm (44, 45, 46, 47), and which adjacent arms (44, 45; 46, 47) each have a knee-joint (48, 49, 50, 51) and are pairwise joined by a common, horizontal mould-lifting part (52, 53).

2. Confectionery food production apparatus according to claim 1, **characterized in, that** the shaft parts (36, 37, 38, 39) are arranged in the same horizontal plane, that the arms (44, 45, 46, 47) have equal length, and
that the shafts (36, 37, 38, 39) are driven by at least one common, programmable servo-motor (57), so that the direction of rotation (R, RC) of the shaft parts are the same as the direction of movement (P1, P2) of the moulds (5).

3. Confectionery food production apparatus according to claim 1 or 2, **characterized in, that** the configuration of the first straight line (2) and of the second straight line (3) are such, that the direction of movement (P1) of the moulds of the first line (2) is the opposite of that (3) of the second line, and that the direction of movement (C1) of the moulds (5) at the first cross-conveyor (34) is the opposite of that (C2) of the second cross-conveyor (35).

4. Confectionery food production apparatus according to one or more of claims 1-3, **characterized in, that** the outer ends of the four shaft parts(36, 37, 38, 39) are each having a curve sheave (58, 59, 60, 61), that each lifting-lowering device (26, 27) further comprise a pair of parallel supporting tracks (62, 63) arranged across and above the elongated track profiles (10, 11) of the particular line and is having a mutual distance, which ends of supporting tracks (62, 63) are carried at the outsides of the elongated track profiles (10, 11) by wagons (66, 67, 68, 69), each of which wagons (66, 67, 68, 69) is further having a downward extending arm part (70, 71, 72, 73), the lower end of which arm part is having a knob (74, 75, 76, 77), to be engaged by the adjacent curve sheave (57, 58, 59, 69), so that the mutual distance is regulated.

5. Confectionery food production apparatus according to one or more of claims 1-4, **characterized in, that** the curve-sheaves (58, 59, 60, 61) are angularly mounted at the shaft-parts (36, 37, 38, 39) in relation to the radially extending arms (44, 45, 46, 47), so that when the arms are in positions, by which the common mould-lifting parts (52, 53) lifts up the particular mould (5), then, the curve-sheaves (58, 59, 60, 61) have engaged the wagons (66, 67, 68, 69) to the largest distance in-between the two parallel supporting tracks 62, 63), and so that when the arms (44, 45, 46, 47) extend vertically upwards, so that the mould-lifting parts (62, 63) are in their uppermost positions, then, the curve-sheaves (58, 59, 60, 61) engage the wagons (66, 67, 68, 69) to the slightest distance in-between the two parallel supporting tracks (62, 63), which then supports the mould (5).

6. Confectionery food production apparatus according to one or more of claims 1-5, **characterized in, that** the angular section of the curve sheaves (58, 59, 60, 61), having enlarged radius, covers an angle of 90° +/- 10°,
and that when the leading parts (78, 79) of the curve sheaves, having maximum radius, engage the knobs (74, 75, 76, 77) at the lower ends of the wagon arms (70, 71, 72, 73), the angular position of the adjacent mould-lifting arms (44, 45; 46, 47) are within +/- 25° of a line through that position.

7. Confectionery food production apparatus according to one or more of claims 1-6, **characterized in, that** the knobs (74, 75, 76, 77) and the shaft parts (36, 37, 38, 39) are arranged in the same horizontal plane, and that the curve sheaves (58, 59, 60, 61) connected by the same common mould lifting-part (52, 53) are rotated 180° in relation to each other on their respective shaft parts (36, 37; 38, 39).

8. Confectionery food production apparatus according to one or more of claims 1-7, **characterized in, that** each of the two cross-conveyors (34, 35) comprises two elongated, parallel, track profiles (80, 81), having a mutual distance adapted to carry a row of moulds (5), and that above each track profile (80, 81) is arranged an elongated support structure (90, 91) with an endless chain (82, 83), which support structure at both ends extends a longer distance (D) further than the particular track profile (10,11) fitting in over the width of the line (2, 3),
which chains (82, 83) are stretched between two sprocket wheels (86, 87), arranged at the ends of the support structure (90, 91) and each driven by a common or separate motor (88), which chains (82, 83) are each carrying a plurality of mould pusher pins (89).

9. Confectionery food production apparatus according to claim 7, **characterized in, that** the ends of the track profiles (80, 81) of the cross-conveyor (34, 35) are arranged in line with the inner ends of the two parallel supporting tracks (62, 63) in their closest position carrying a mould (5).

10. Use of two straight confectionery lines, each depositing confectionery mass in cavities in an underlying row of continuously moving confectionery moulds supported and guided at their opposite sides by the insides of elongated track profiles, each of which profiles are also carrying a respective endless chain, which chains are stretched between a plurality of sprocket wheels, arranged at the particular line and each driven by at least one sprocket wheel and a motor, which chains are each carrying a plurality of inwardly extending pins engaging with recesses in the neighboring sides of the moulds, and which straight lines each comprise a mass depositor unit and a cooling section, in parallel arrangement of the two lines, and in combination with two mutual cross-conveyors adapted to carry moulds forth and back between the two lines, for manufacturing chocolate articles.

## Patentansprüche

1. Süßwarenproduktionsvorrichtung (1), umfassend eine erste gerade Produktionslinie (2), die Süßwarenmasse in Hohlräume (4) in einer darunterliegenden Reihe von sich kontinuierlich bewegenden Süßwarenformen (5) ablegt, die an ihren gegenüberliegenden Seiten (6, 7) von den Innenseiten (8, 9) länglicher Schienenprofile (10, 11) getragen und geführt werden, wobei jedes der Profile (10, 11) auch eine jeweilige Endloskette (12, 13) trägt, wobei die Ketten (12, 13) zwischen einer Vielzahl von Kettenrädern (16) gespannt sind, an der Produktionslinie (2) angeordnet sind und jeweils von mindestens einem Kettenrad und einem Motor (18) angetrieben werden, wobei die Ketten (12, 13) jeweils eine Vielzahl von sich nach innen erstreckenden Stiften (12P, 13P) tragen, die in Aussparungen (5R) in den benachbarten Seiten (6, 7) der Formen (5) eingreifen, und wobei die ersten gerade Produktionslinie (2) eine Massen-Ablageeinheit (22) und eine Kühlstrecke (21) umfasst,
**dadurch gekennzeichnet, dass** die Vorrichtung (1) eine weitere sekundäre, gerade Produktionslinie (3) umfasst, die dasselbe wie oben umfasst und parallel zu der ersten Produktionslinie (2) angeordnet ist, wobei die erste und sekundäre gerade Produktionslinie (2, 3) über zwei Querförderer (34, 35) miteinander verbunden sind, die dazu ausgelegt sind, die Süßwarenformen (5) zwischen den beiden Produktionslinien (2, 3) hin- und herzutransportieren, dass die erste und die sekundäre Produktionslinie (2, 3) an den Eingriffspunkten mit den Querförderern (34, 35) Hebe-Senk-Vorrichtungen (26, 27, 30, 31) aufweisen, die dazu ausgeführt sind, eine vorbeilaufende Form (5) von der jeweiligen geraden Produktionslinie (2, 3) und auf einen Querförderer (34, 35) anzuheben oder eine Form (5) von dem Querförderer (34, 35) in eine freie Öffnung zwischen den Formen (5) auf der der jeweiligen geraden Produktionslinie (2, 3) abzusenken oder sind zu beidem ausgeführt, und wobei die Hebe-Senk-Vorrichtungen (26, 27, 30, 31) ferner vier Wellenteile (36, 37, 38, 39) umfassen, die paarweise angeordnet sind und sich quer unter jedem der zwei länglichen Schienenprofile (10, 11) der jeweiligen Produktionslinie (2, 3) erstrecken und auf das gegenüberliegende Paar Wellenteile (36, 37, 38, 39) ausgerichtet sind, wobei die inneren Enden (40, 41, 42, 43) der vier Wellenteile (36, 37, 38, 39) jeweils einen sich radial erstreckenden Arm (44, 45, 46, 47) aufweisen und wobei benachbarte Arme (44, 45, 46, 47) jeweils ein Kniegelenk (48, 49, 50, 51) aufweisen und paarweise durch ein gemeinsames horizontales Formhebeteil (52, 53) verbunden sind.

2. Süßwarenproduktionsvorrichtung nach Anspruch 1, **dadurch gekennzeichnet, dass** die Wellenteile (36, 37, 38, 39) in derselben horizontalen Ebene angeordnet sind, dass die Arme (44, 45, 46, 47) gleich lang sind und
dass die Wellen (36, 37, 38, 39) von mindestens einem gemeinsamen programmierbaren Servomotor (57) angetrieben werden, so dass die Drehrichtung (R, RC) der Wellenteile gleich der Bewegungsrichtung (P1, P2) der Formen (5) ist.

3. Süßwarenproduktionsvorrichtung nach Anspruch 1 oder 2, **dadurch gekennzeichnet, dass** die Konfiguration der ersten geraden Produktionslinie (2) und der zweiten geraden Produktionslinie (3) derart ist, dass die Bewegungsrichtung (P1) der Formen der ersten Produktionslinie (2) derjenigen der zweiten Produktionslinie (3) entgegengesetzt ist und dass die Bewegungsrichtung (C1) der Formen (5) an dem ersten Querförderer (34) derjenigen (C2) des zweiten Querförderers (35) entgegengesetzt ist.

4. Süßwarenproduktionsvorrichtung nach einem oder mehreren der Ansprüche 1 - 3, **dadurch gekennzeichnet, dass** die äußeren Enden der vier Wellenteile (36, 37, 38, 39) jeweils eine Kurvenrillenscheibe (58, 59, 60, 61) aufweisen, dass jede Hebe-Senk-Vorrichtung (26, 27) ferner ein Paar paralleler Stützschienen (62, 63) umfasst, die über und oberhalb der länglichen Schienenprofile (10, 11) der jeweiligen Produktionslinie sind und einen gegenseitigen Abstand haben, wobei die Enden der Stützbahnen (62, 63) an den Außenseiten der länglichen Schienenprofile (10, 11) von Wagen (66, 67, 68, 69) getragen werden, wobei jeder der Wagen (66, 67, 68, 69) ferner einen sich nach unten erstreckenden Armteil (70, 71, 72, 73) aufweist, wobei das untere Ende des Armteils einen Knopf (74, 75, 76, 77) aufweist, der von der benachbarten Kurvenrillenscheibe (57, 58, 59, 69) in Eingriff zu nehmen ist, so dass der gegenseitige Abstand geregelt wird.

5. Süßwarenproduktionsvorrichtung nach einem oder mehreren der Ansprüche 1 - 4, **dadurch gekennzeichnet, dass** die Kurvenrillenscheiben (58, 59, 60, 61) an den Wellenteilen (36, 37, 38, 39) bezüglich der sich radial erstreckenden Arme (44, 45, 46, 47) winklig montiert sind, so dass, wenn die Arme in Positionen sind, durch die die gemeinsamen Formhebeteile (52, 53) die jeweilige Form (5) anheben, die Kurvenrillenscheiben (58, 59, 60, 61) dann die Wagen (66, 67, 68, 69) mit dem größten Abstand zwischen den beiden parallelen Stützschienen (62, 63) in Eingriff genommen haben, und so, dass, wenn sich die Arme (44, 45, 46, 47) vertikal nach oben erstrecken, so dass sich die Formhebeteile (62, 63) in ihren obersten Positionen befinden, die Kurvenrillenscheiben (58, 59, 60, 61) dann die Wagen (66, 67, 68, 69) mit dem geringsten Abstand zwischen den beiden parallelen Stützschienen (62, 63) in Eingriff nehmen, was dann die Form (5) stützt.

6. Süßwarenproduktionsvorrichtung nach einem oder mehreren der Ansprüche 1 - 5, **dadurch gekennzeichnet, dass** der Winkelabschnitt der Kurvenrillenscheiben (58, 59, 60, 61) mit vergrößertem Radius einen Winkel von 90° +/- 10° abdeckt,
und dass die Winkelstellung der benachbarten Formhebearme (44, 45; 46, 47) innerhalb von +/- 25° einer Linie durch diese Position liegt, wenn die vorderen Teile (78, 79) der Kurvenrillenscheiben mit maximalem Radius die Knöpfe (74, 75, 76, 77) an den unteren Enden der Wagenarme (70, 71, 72, 73) in Eingriff nehmen.

7. Süßwarenproduktionsvorrichtung nach einem oder mehreren der Ansprüche 1 - 6, **dadurch gekennzeichnet, dass** die Knöpfe (74, 75, 76, 77) und die Wellenteile (36, 37, 38, 39) in derselben horizontalen Ebene angeordnet sind und dass die durch das gleiche gemeinsame Formhebeteil (52, 53) verbundenen Kurvenrillenscheiben (58, 59, 60, 61) auf ihren jeweiligen Wellenteilen (36, 37; 38, 39) um 180° bezüglich einander gedreht sind.

8. Süßwarenproduktionsvorrichtung nach einem oder mehreren der Ansprüche 1 - 7, **dadurch gekennzeichnet, dass** jeder der beiden Querförderer (34, 35) zwei längliche parallele Schienenprofile (80, 81) mit einem gegenseitigen Abstand aufweist, der zum Tragen einer Reihe von Formen (5) ausgelegt ist, und dass oberhalb jedes Schienenprofils (80, 81) eine längliche Stützstruktur (90, 91) mit einer Endloskette (82, 83) angeordnet ist, wobei sich die Stützstruktur an beiden Enden um eine längere Strecke (D) weiter erstreckt als das jeweilige über die Breite der Produktionslinie (2, 3) passende Schienenprofil (10, 11),
wobei die Ketten (82, 83) zwischen zwei an den Enden der Stützstruktur (90, 91) angeordneten und jeweils von einem gemeinsamen oder einem separaten Motor (88) angetriebenen Kettenrädern (86, 87) gespannt sind, wobei die Ketten (82, 83) jeweils Vielzahl von Formschieberstiften (89) tragen.

9. Süßwarenproduktionsvorrichtung nach Anspruch 7, **dadurch gekennzeichnet, dass** die Enden der Schienenprofile (80, 81) des Querförderers (34, 35) in ihrer am nächsten gelegenen, eine Form (5) tragenden Position fluchtend mit den inneren Enden der beiden parallelen Stützschienen (62, 63) angeordnet sind.

10. Verwendung von zwei geraden Süßwarenproduktionslinien, die jeweils Süßwarenmasse in Hohlräumen in einer darunterliegenden Reihe von sich kontinuierlich bewegenden Süßwarenformen ablegen, die an ihren gegenüberliegenden Seiten von den Innenseiten von länglichen Schienenprofilen getragen und geführt werden, wobei jedes der Profile auch eine jeweilige Endloskette trägt, wobei die Ketten zwischen einer Vielzahl von Kettenrädern gespannt sind, an der jeweiligen Produktionslinie angeordnet sind und jeweils von mindestens einem Kettenrad und einem Motor angetrieben werden, wobei die Ketten jeweils eine Vielzahl von sich nach innen erstreckenden Stiften tragen, die mit Aussparungen in den benachbarten Seiten der Formen in Eingriff kommen, und wobei die geraden Produktionslinien jeweils eine Massen-Ablageeinheit und eine Kühlstrecke umfassen, in paralleler Anordnung der beiden Produktionslinien und in Kombination mit zwei gegenseitigen Querförderern, die dazu ausgeführt sind, Formen zur Herstellung von Schokoladenartikeln zwischen den beiden Produktionslinien hin- und herzutransportieren.

## Revendications

1. Appareil de production alimentaire de confiserie (1) comprenant une première chaîne droite (2) déposant une masse de confiserie dans des cavités (4) dans une rangée sous-jacente de moules de confiserie se déplaçant en continu (5), supportés et guidés sur leurs côtés opposés (6, 7) par les intérieurs (8, 9) de profilés de rails allongés (10, 11), chacun desquels profilés (10, 11) porte également une chaîne sans fin respective (12, 13), lesquelles chaînes (12, 13) sont étirées entre une pluralité de roues dentées (16), agencées sur la chaîne (2) et entraînées chacune par au moins une roue dentée et un moteur (18), lesquelles chaînes (12, 13) portent chacune une pluralité de tiges s'étendant vers l'intérieur (12P, 13P) entrant en prise avec des évidements (5R) dans les côtés voisins (6, 7) des moules (5), et laquelle première chaîne droite (2) comprend une unité dépositrice de masse (22) et une section de refroidissement (21),
**caractérisé en ce que** l'appareil (1) comprend une chaîne droite secondaire supplémentaire (3) comprenant les mêmes éléments que ceux indiqués ci-dessus et agencée en parallèle à la première chaîne (2), et lesquelles première chaîne droite et chaîne droite secondaire (2, 3) sont reliées mutuellement par l'intermédiaire de deux convoyeurs transversaux (34, 35) adaptés pour transporter les moules de confiserie (5) en va-et-vient entre les deux chaînes (2, 3), que, aux points d'entrée en prise avec le convoyeurs transversaux (34, 35), la première chaîne et la chaîne secondaire (2, 3) comprennent des dispositifs de levage-abaissement (26, 27, 30, 31), qui sont adaptés pour lever un moule passant (5) depuis la chaîne droite particulière (2, 3) et jusque sur un convoyeur transversal (34, 35), ou pour abaisser un moule (5) depuis le convoyeur transversal (34, 35) et jusque dans une ouverture libre entre les moules (5) dans la chaîne droite particulière (2, 3), ou sont adaptés pour les deux, et lesquels dispositifs de levage-abaissement (26, 27, 30, 31) comprennent en outre quatre parties arbres (36, 37, 38, 39) agencées par paire s'étendant en travers en dessous de chacun des deux profilés de rails allongés (10, 11) de la chaîne particulière (2, 3) et alignées avec la paire opposée de parties arbres (36, 37 ; 38, 39), lesquelles extrémités intérieures (40, 41, 42, 43) des quatre parties arbres (36, 37, 38, 39) ont chacune un bras s'étendant radialement (44, 45, 46, 47), et lesquels bras adjacents (44, 45 ; 46, 47) ont chacun une articulation de genou (48, 49, 50, 51) et sont joints par paire par une partie de levage de moule horizontale commune (52, 53).

2. Appareil de production alimentaire de confiserie selon la revendication 1, **caractérisé en ce que** les parties arbres (36, 37, 38, 39) sont agencées dans le même plan horizontal, que les bras (44, 45, 46, 47) ont une longueur égale, et
**que** les arbres (36, 37, 38, 39) sont entraînés par au moins un servo-moteur programmable commun (57), de telle sorte que la direction de rotation (R, RC) des parties arbres est la même que la direction de mouvement (P1, P2) des moules (5).

3. Appareil de production alimentaire de confiserie selon la revendication 1 ou 2, **caractérisé en ce que** la configuration de la première chaîne droite (2) et de la seconde chaîne droite (3) est telle que la direction de mouvement (P1) des moules de la première chaîne (2) est l'opposé de celle (3) de la seconde chaîne, et que la direction de mouvement (C1) des moules (5) sur le premier convoyeur transversal (34) est l'opposé de celle (C2) du second convoyeur transversal (35).

4. Appareil de production alimentaire de confiserie selon une ou plusieurs des revendications 1 à 3, **caractérisé en ce que** les extrémités extérieure des quatre parties arbres (36, 37, 38, 39) ont chacune un réa courbe (58, 59, 60, 61), que chaque dispositif de levage-abaissement (26, 27) comprend en outre une paire de rails de support parallèles (62, 63) agencés en travers et au-dessus des profilés de rails allongés (10, 11) de la chaîne particulière et a une distance mutuelle, lesquelles extrémité des rails de support (62, 63) sont portées sur les extérieurs des profilés de rails allongés (10, 11) par des chariots (66, 67, 68, 69), chacun desquels chariots (66, 67, 68, 69) a en outre une partie bras s'étendant vers le bas (70, 71, 72, 73), l'extrémité inférieure de laquelle partie bras a un bouton (74, 75, 76, 77), avec lequel doit entrer en prise le réa courbe adjacent (57, 58, 59, 69), de telle sorte que la distance mutuelle est régulée.

5. Appareil de production alimentaire de confiserie selon une ou plusieurs des revendications 1 à 4, **caractérisé en ce que** les réas courbes (58, 59, 60, 61) sont montés angulairement sur les parties arbres (36, 37, 38, 39) relativement aux bras s'étendant radialement (44, 45, 46, 47), de telle sorte que, lorsque les bras sont dans des positions par lesquelles les parties de levage de moule communes (52, 53) lèvent le moule particulier (5), alors les réas courbes (58, 59, 60, 61) sont entrés en prise avec les chariots (66, 67, 68, 69) selon la distance la plus grande entre les deux rails de support parallèles 62, 63), et de telle sorte que, lorsque les bras (44, 45, 46, 47) s'étendent verticalement vers le haut, de telle sorte que les parties de levage de moule (62, 63) sont dans leurs positions les plus hautes, alors les réas courbes (58, 59, 60, 61) entrent en prise avec les chariots (66, 67, 68, 69) selon la distance la plus petite entre les deux rails de support parallèles (62, 63), ce qui alors supporte le moule (5).

6. Appareil de production alimentaire de confiserie selon une ou plusieurs des revendications 1 à 5, **caractérisé en ce que** la section angulaire des réas courbes (58, 59, 60, 61), ayant un rayon agrandi, couvre un angle de 90° +/- 10°,
et que, lorsque les parties menante (78, 79) des réas courbes, ayant un rayon maximum, entrent en prise avec les boutons (74, 75, 76, 77) aux extrémités inférieures des bras de chariot (70, 71, 72, 73), la position angulaire des bras de levage de moule adjacents (44, 45 ; 46, 47) est dans les limites de +/- 25° d'une ligne à travers cette position.

7. Appareil de production alimentaire de confiserie selon une ou plusieurs des revendications 1 à 6, **caractérisé en ce que** les boutons (74, 75, 76, 77) et les parties arbres (36, 37, 38, 39) sont agencés dans le même plan horizontal, et que les réas courbes (58, 59, 60, 61) reliés par la même partie de levage de moule commune (52, 53) sont tournés de 180° relativement les uns aux autres sur leurs parties arbres respectives (36, 37 ; 38, 39).

8. Appareil de production alimentaire de confiserie selon une ou plusieurs des revendications 1 à 7, **caractérisé en ce que** chacun des deux convoyeurs transversaux (34, 35) comprend deux profilés de rails allongés parallèles (80, 81), ayant une distance mutuelle adaptée pour transporter une rangée de moules (5), et que, au-dessus de chaque profilé de rail (80, 81) est agencée une structure de support allongée (90, 91) avec une chaîne sans fin (82, 83), laquelle structure de support aux deux extrémités s'étend sur une distance plus longue (D) plus loin que le profilé de rail particulier (10, 11) s'ajustant par-dessus la largeur de la chaîne (2, 3),
lesquelles chaînes (82, 83) sont étirées entre deux roues dentées (86, 87), agencées aux extrémités de la structure de support (90, 91) et entraînées chacune par un moteur commun ou distinct (88), lesquelles chaînes (82, 83) portent chacune une pluralité de tiges poussoirs de moule (89).

9. Appareil de production alimentaire de confiserie selon la revendication 7, **caractérisé en ce que** les extrémités des profilés de rails (80, 81) du convoyeur transversal (34, 35) sont agencées en ligne avec les extrémités intérieures des deux rails de support parallèles (62, 63) dans leur position la plus proche transportant un moule (5).

10. Utilisation de deux chaînes de confiserie droites, chacune déposant une masse de confiserie dans des cavités dans une rangée sous-jacente de moules de confiserie se déplaçant en continu supportés et guidés sur leurs côtés opposés par les intérieurs de profilés de rails allongés, chacun desquels profilés porte également une chaîne sans fin respective, lesquelles chaînes sont étirées entre une pluralité de roues dentées, agencées sur la chaîne particulière et entraînées chacune par au moins une roue dentée et un moteur, lesquelles chaînes portent chacune une pluralité de tiges s'étendant vers l'intérieur entrant en prise avec des évidements dans les côtés voisins des moules, et lesquelles chaînes droites comprennent chacune une unité dépositrice de masse et une section de refroidissement, en agencement parallèle des deux chaînes, et en association avec deux convoyeurs transversaux mutuels adaptés pour transporter des moules en va-et-vient entre les deux chaînes, pour la fabrication d'articles en chocolat.
